# EUROPEAN PATENT SPECIFICATION

(11) **EP 3 036 025 B1**
(45) Date of publication and mention of the grant of the patent: **14.02.2018**
(21) Application number: 14758694.5
(22) Date of filing: 04.08.2014
(51) Int. Cl.: B01D 19/00, F24D 3/10

(54) **METHOD AND DEVICE FOR DEGASSING**
ENTGASUNGSVERFAHREN UND -VORRICHTUNG
PROCÉDÉ ET DISPOSITIF DE DEGAZAGE

(30) Priority: 23.08.2013 NL 2011333
(43) Date of publication of application: 29.06.2016
(73) Proprietor: Flamco B.V., 3751 LJ Bunschoten (NL)
(72) Inventor: CNOSSEN, Jan Henk, NL-8723 CP Koudum (NL); BOUW, Meeuwis, NL-6721 AS Bennekom (NL)
(74) Representative: Grootscholten, Johannes A.M.
(86) International application number: PCT/NL2014/050546
(87) International publication number: WO 2015/026228

(56) References cited:
- WO-A1-2013/037796
- WO-A1-2013/092420
- WO-A2-2009/131450
- US-A- 4 704 140
- US-A- 4 769 151
- US-A- 4 816 044

## Description

The present invention relates to a method and a device for degassing.

The necessity for degassing a heating or cooling installation in which water or a water-glycol mixture is used as medium is evident and has been sufficiently demonstrated. Formation of gas in an installation results in decreased performance and higher energy consumption. Consequences hereof will make themselves felt directly, since the heat transfer by 'gas-rich' water is limited and can result in circulation problems, but mainly indirectly, in that formation of gas contributes significantly toward corrosion in a system. Corrosion formation eventually results in jammed thermostatic taps, defective circulation pump, boiler noise and finally in leakage.

The necessary degassing of an installation in order to allow an installation to function in disturbance-free and efficient manner is always at odds with the energy necessary for the degassing process itself. Using a standard float vent free gases can be discharged automatically if this vent is mounted at a highest point in an installation. There may however still be gas inclusions at inaccessible locations. Nor is it possible to prevent the installation water comprising a harmful quantity of bound gases, whereby harmful corrosion processes still occur.

In the light of such problems installations, methods and devices have already been developed in the past, also by the inventors of the present invention, which were based on a pressure step principle. A part of the water at a time from the installation is here isolated in a reservoir in which its pressure is reduced. Making use of Henry's law, the isolated system water is able to absorb fewer gases at this lower pressure. The gases released during this pressure step are discharged via a float vent, which is mounted on the reservoir, by allowing a brief rise in the pressure and the water level in the reservoir. In a subsequent cycle the degassed water is fed back as 'undersaturated' from the reservoir into the system, and a subsequent quantity of water is admitted for degassing. This relatively undersaturated water can in turn absorb free enclosed gases in the installation (even from inaccessible locations in the installation).

By repeating this process an installation is eventually completely degassed to a safe level. Different systems which operate according to the pressure step principle are known.

Because a pump is necessary for this process, a close eye has to be kept on the overall energy performance during this process of degassing. The installation must be kept out of the danger zone (corrosion due to formation of gas), while the heat transfer within this installation also has to be optimal in view of the consequences of poor circulation and/or heat transfer by gases. However, as soon as this optimum is reached the process of forced degassing has to be ended immediately in order to prevent unnecessary energy loss for this process of degassing.

A generally accepted nitrogen level of 1.2 ml/l (or 15 mg/l) is adhered to as lower limit for this gas equilibrium. This limit value has to be monitored closely so that not only does the energy performance of the installation remain optimal but the installation itself also remains in good condition.

No effective measuring method is available in known pressure step degassers, and the degassing process is influenced or even controlled manually. The effect hereof is that degassing often takes place for an unnecessarily long time.

The currently known degassers comprise for this purpose an option of being able to determine whether gas is still being separated from the installation. This is not an accurate method because the occurrence of gases in an installation depends on the temperature and pressure prevailing in the system (Henry's law). If no more gases are being separated excessive degassing may already have taken place, whereby an unnecessarily large amount of energy may have been wasted.

In the known degassers an underpressure regulation is additionally implemented; the object here is to approximate zero bar absolute as closely as possible on the assumption that all gases will be extracted from the medium on the basis of this approximation.

A result hereof is however that the medium will begin to boil at the temperature prevailing therein and at the sudden lower pressure, whereby a great deal of turbulence and turmoil is created in the medium. In addition to the desirable discharge of gases from the system it is unavoidable here that water vapour is also released during the boiling process and discharged via the vent, for instance the above stated float vent or any other type of vent. A configuration of a degasser with a float vent is for instance known from US-2011/0168017.

Water vapour can cause a difficult situation, particularly because condensing water vapour can escape from the degasser. During degassing according to the pressure step method, wherein the vapour curve (boiling point of water or any other medium applied in the main system) is not attained and the water starts to boil, an unnecessarily large amount of energy is thus lost, particularly at the pump, while water vapour released here causes damage to pressure step degassers or degassing devices in general.

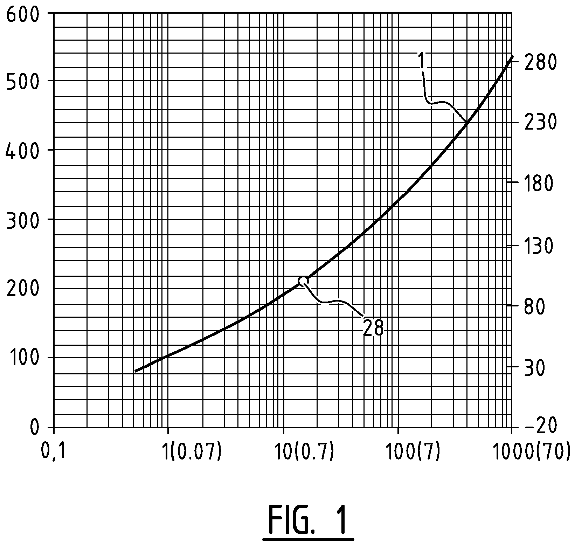

Figure 1 shows the saturation curve 1 or 'boiling curve' of water plotted against pressure along the horizontal axis at the bottom and temperature in Celsius along the vertical axis on the right, or in Fahrenheit along the vertical axis on the left. The boiling point at atmospheric pressure is indicated at point 28. This graph shows unambiguously that water in the reservoir begins to boil if the vapour curve is not attained. In other words, the water (or any other medium in the main system 3) will boil and/or evaporate if the pressure becomes too low at a prevailing temperature.

Energy, which is usually supplied by a pump, is necessary for the purpose of increasing a pressure difference. An exorbitant amount of energy is usually necessary to approximate zero bar absolute, and this must be deemed as needlessly expended when an intended operation at a pressure higher than a value approximating zero bar absolute will already suffice. Operation of the pump only deteriorates here when (large) quantities of water vapour are released at the pressure in a reservoir approximating zero bar absolute, as has formerly always been the objective in the prior art.

Wholly separately of the above assumptions about the prior art, reference is made here to WO-2013/092420, relative to which at least the features in the characterizing parts of the appended independent claims are new. This disclosure is based on mixing/dilution with nitrogen, which is added when a partial pressure of a component in the gas phase rises above a vapour pressure of the liquid for degassing, wherein this has to be realized in a less than saturated state. This requires an additional supply or generator of nitrogen. The approximation taught in this publication is further based wholly on the reservoir being completely sealed for a period of time for the purpose of degassing liquid present therein.

Reference is also made to US-4816044 which discloses a reservoir and a heater therein for maintaining a constant temperature in the reservoir, according to which - with substantially the same objective - vapour in the reservoir is kept below saturation level by mixing/dilution with ambient air. This approximation requires a controlled heating, which increases complexity and cost. In addition, the approximation is also wholly limited here to complete sealing of the reservoir during degassing of the medium in the reservoir.

The two prior art publications, which span a period of approximately 25 years, are found to teach the addition of gas as solution to problems during degassing, whereby it is precisely the taught mixing/dilution with gas to be supplied externally which thwarts the main objective of degassing.

The invention has for its object to obviate or at least reduce the problems of the known art, for which purpose a degassing device is provided which has all the features in the appended independent claim 1.

The present invention thus provides an improvement of the stepwise degassing according to the known art, and provides by means of ingenious control a manageable degree of degassing in the treated installation. The invention can be implemented here in the form of the degassing device per se and/or in a system in association with a cooling or heating installation, and/or as method, or even be integrated into a control for the whole process, for instance in the form of program routines. Pressure step degassing can also be implemented according to the method proposed by the present invention. It is notable here that the prior art teaches complete sealing of the medium received in the reservoir. In marked contrast and in inventive manner the present invention goes against this in that decrease of the pressure in the reservoir to too low a value is prevented using medium from the system instead of gases to be added, wherein medium from the system is or can be added to the reservoir during degassing.

According to the present invention pressure, time and also temperature therefore determine control of the operation of the reservoir and the associated controllable valve and the pump. Temperature or at least evaporation (boiling) of medium forms an important and previously insufficiently acknowledged factor in the process in degassing in general and in pressure step degassers in particular. The pressure decrease does after all imply a reduction in the boiling threshold of the water, as will be apparent from the saturation curve 1 or "boiling curve" in Figure 1.

The invention is thus based on and aimed at approximating the boiling threshold without going below it and at least without the medium from the main system, which is in the reservoir in order to be degassed, beginning to boil. Better options are hereby provided for an even more efficient process of degassing. Close to the boiling threshold water is no longer able to absorb gases. It is thus considered desirable for the medium to approximate its boiling point at the prevailing temperature and pressure, but not to start evaporating (boiling).

A more efficient pressure step degasser is obtained by now also including the temperature, in addition to the prevailing pressure, as controlling component in the process of degassing. By including both the pressure and the temperature in the control process it is possible to determine in very precise yet nevertheless simple manner the degree to which an installation is degassed, or at least that part of the medium from the installation which is isolated in the degassing reservoir, and so ultimately also from the medium in the installation itself.

In addition to the degassing device as discussed above, the present invention also relates to a system with a cooling or heating installation and the degassing device. The present invention also relates to a method and a program for performing the method when the programme is loaded onto or into a computer or control, and the present invention also relates to a control for implementing the method.

The present invention has diverse preferred embodiments dependent on the main concept thereof, several of which are defined in dependent claims which are associated with relevant independent claims in the appended set of claims. The features thereof will be discussed in more detail hereinbelow in the description of the accompanying figures in which a preferred embodiment of the present invention is shown in the form of a degassing device.

After the foregoing, more generic statement of aspects, elements, steps and components of the present invention, substantially with reference to the appended claims, there follows hereinbelow a more detailed description of a possible embodiment thereof with reference to the following figure description, in which reference is made to the accompanying drawing. The shown and described embodiments serve only to illustrate the present invention, and none of the aspects, elements, steps and components of the embodiments described or shown therein can or may be interpreted as limitative of the scope of protection of the present invention, as is indeed the case for the appended claims, and more particularly only the appended independent claims. In different figures of the accompanying drawing relating to mutually alternative embodiments the same or similar reference numerals can be applied for the same or similar elements, components or aspects. In the drawing:
Figure 1 shows a graph of boiling temperatures of water along a curve, depending on prevailing pressure;
Figure 2 shows an example of an embodiment of a degassing device in a situation in which it is assembled with a main system;
Figure 3 shows in a graph a curve corresponding to the curve of boiling points in figure 1, also including here a representation of a nitrogen concentration in water as embodiment of medium from the main system to which a degassing device can be connected;
Figure 4 shows a graph of a saturation curve and a desaturation curve, plotted in time against water temperature; and
Figure 5 is an alternative configuration of and relative to that of figure 2.

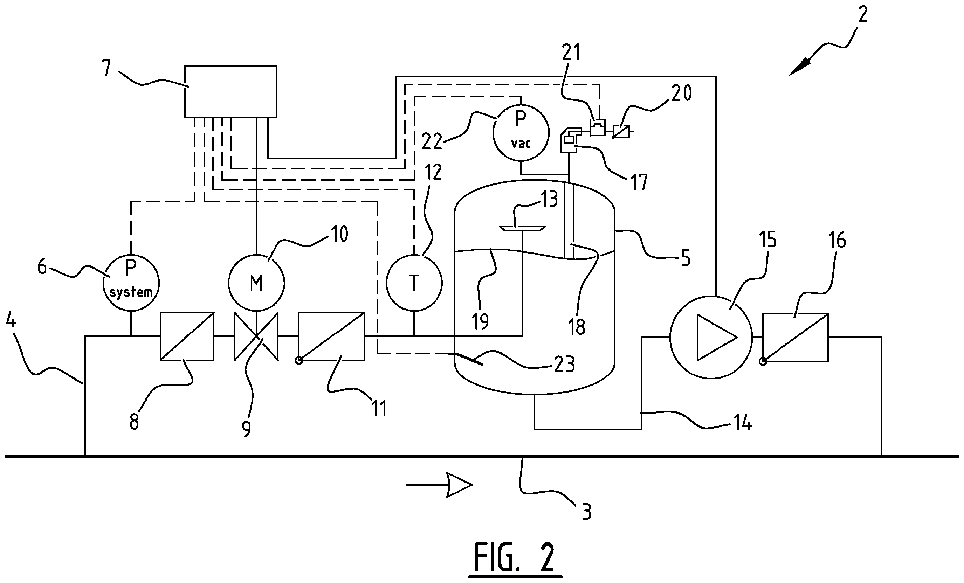

The pressure step degasser 2 such as can be designed to operate according to the principle of the invention is shown schematically in Figure 2.

The pressure step degasser 2 is connected to a heating or cooling system 3, which can also be referred to below as main system 3.

A supply conduit 4 runs from main system 3 to a reservoir 5. Arranged in supply conduit 4 is a pressure sensor 6 with which system pressure in the main system can be sensed and transmitted to a control 7 to which pressure sensor 6 is connected. A filter 8 is arranged downstream of pressure sensor 6. Further arranged is a controllable valve 9, 10, such as a motor valve 9, which comprises or is associated with a motor 10, which motor valve 9, 10 is connected to control 7 for selective driving of motor valve 9, 10. Further arranged adjacently of motor valve 9, 10 is a non-return valve 11, followed by a temperature sensor 12. With this temperature sensor temperature of the medium in reservoir 5 can be measured, and temperature sensor 12 is connected to control 7 so that a measurement value of the temperature of the medium in supply conduit 4 can be transmitted to control 7.

Supply conduit 4 debouches in reservoir 5 via a dish or spray element 13 which contributes toward enlarging of the surface area of the medium for better degassing thereof in reservoir 5.

Connected to the underside of reservoir 5 is a discharge conduit 14 which runs to a pump 15. Pump 15 is selectively activated and deactivated by the control to which pump 15 is connected. Arranged adjacently of this pump 15 on the outlet side in the discharge 14 to main system 3 is another non-return valve 16.

Depending on features of pump 15, it may be necessary to arrange this non-return valve 16 on the suction side of this pump 15, for instance in order to prevent air being drawn in along a shaft seal of pump 15.

The pressure of the main system is substantially equal at the position of the two connections of supply conduct 4 and discharge conduit 14 to main system 3.

The control is configured to drive motor valve 9, 10 and pump 15 and to thus control pressure in reservoir 5. This is preferably underpressure. It cannot be precluded that there may be overpressure relative to the area surrounding the reservoir, just as long as there is underpressure relative to medium pressure in main system 3. The (under)pressure can thus be controlled hydraulically here in the embodiment shown in figure 2.

In reservoir 5 a 'fixed' gas cushion is maintained above a medium level or water level 19 in reservoir 5 in that a float vent 17 is mounted on top of a pipe 18 placed in the reservoir. Gas discharge to float vent 17 is blocked as soon as a water level 19 or medium level rises above the underside of this pipe 18.

Arranged on the air discharge of the float vent is a return flow blocking 20, as well as a micro-pressure switch 21 which is connected to control 7. This micro-pressure switch 21 transmits a contact signal to control 7 as soon as gas leaves float valve 17.

The pressure in reservoir 5 is monitored using a pressure sensor 22 connected to control 7 and on top of reservoir 5.

A minimum medium level 19 in the reservoir is monitored by a float switch 23 connected to control 7.

The control process of a pressure step degasser comprises of suctioning water from main system 3 into reservoir 5 via filter 8, motor valve 9, 10 and non-return valve 11, wherein this water is subjected to a lower pressure in reservoir 5 than the pressure prevailing in main system 3 as a result of the operation of pump 15 in combination with the operation of motor valve 9, 10 under the influence of control 7. The pressure drop to which the water or medium is subjected causes degassing of the medium or water.

The supply to reservoir 5 is for this purpose reduced relative to a pump capacity of pump 15 using motor valve 9, 10 and under the influence of the control. This approach of constricting the supply conduit can be described as at least partially opening the supply conduit to reservoir 5 during degassing and thereby providing a throughfeed capacity smaller than a pump capacity of the pump. The invention thus particularly includes interaction between motor valve 9, 10 and pump 15 under the influence of control 7 and taking into account measured pressure and temperature values.

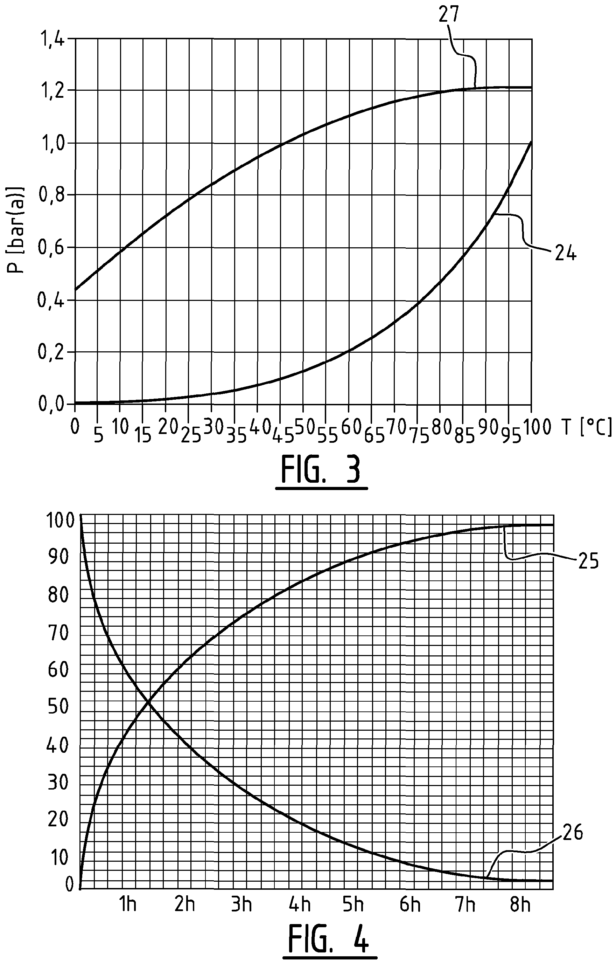

For the purpose of optimum or at least maximum degassing it was previously assumed according to the known art that the pressure had to approximate zero bar absolute as closely as possible. According to the present invention however, it is proposed to hold the pressure in reservoir 5 at or preferably just above the 'boiling curve' 24 of the graph in Figure 3. A pressure value above 'boiling curve' 24 in Figure 3 is for instance a fraction thereabove, more particularly for instance 0.1-0.2 bar above 'boiling curve' 24.

Gases will be released in reservoir 5 by continuously guiding water from main system 3 through the pressure step degasser 2, always with a pressure difference, wherein a lowest pressure is set by control 7 and corresponding driving of motor valve 9, 10 and pump 15. After a time, or in any case when liquid level 19 activates float switch 23, pump 15 will be switched off briefly by control 7 after this latter receives a signal from float switch 23. The water level rises in reservoir 5 as a result of the pressure in main system 3.

The gases collected in reservoir 5 above liquid level 19 are discharged via float vent 17 as soon as the gas pressure in reservoir 5 is higher than the atmospheric pressure. Using the micro-pressure switch 21 it is possible to monitor whether gas extracted from the water or other medium is actually discharged via float vent 17.

It is readily possible to discharge released gases because the process of 'desaturation' along desaturation curve 26 in Figure 4 progresses more quickly than the process of 'saturation' along saturation curve 25 in Figure 4. In Figure 4 these curves 25, 26 are plotted against time along the horizontal axis, with a percentage of saturation along the vertical axis. Because liquid level 19 and the pressure in reservoir 5 of the pressure step degasser 2 rise in a short amount of time, released gases are discharged via float vent 17 before these gases can dissolve again.

It is also possible to check at determined moments (daily, weekly or whenever desirable) whether the main system has been sufficiently degassed, although this can also be done continuously.

Curve 27 in Figure 3 is monitored for this purpose. This curve 27 represents a nitrogen concentration of 12 ml per litre of water. Nitrogen is monitored because nitrogen provides an accurate indication of total quantities of gases present in the medium. This is even the case after the oxygen present in the medium or water will have completely 'disappeared', for instance as a result of corrosion processes. When this pressure curve 27 is monitored for a number of minutes, no more gas should have been released. Whether this is the case can preferably be tested again in simple manner by briefly stopping pump 15, whereby water level 19 and thereby also the pressure in reservoir 5 of the pressure step degasser 2 rise. The micro-pressure switch 21 behind float vent 17 on reservoir 5 may not then be switched on.

If a notification from micro-pressure switch 21 does not occur, it is possible to refrain from degassing using pressure step degasser 2 for a period of time to be determined. According to a fixed or adjustable period of time checking can take place in accordance with the above described procedure, in which the red 12ml/l curve is monitored, so as to be able to determine whether the water in main system 3 is still sufficiently degassed.

As soon as it is found during a check that gas can be extracted, the normal program for degassing with the pressure step degasser 2 is resumed.

A distinction can also be made in similar manner as to the intensity with which degassing should take place. If the ideal gas concentration is exceeded slightly, longer pauses can be taken between the pressure steps (switch off pump 15 for longer).

Degassing can also take place in even more energy-efficient manner by only degassing or degassing more intensively at a highest temperature in main system 3. A temperature variation in main system 3 can after all be determined in simple manner by monitoring the heating cycle and/or with a random thermometer (not shown) associated with the main system.

These options can be implemented in one or more than one program routine, and run as automatic processes or as selected settings.

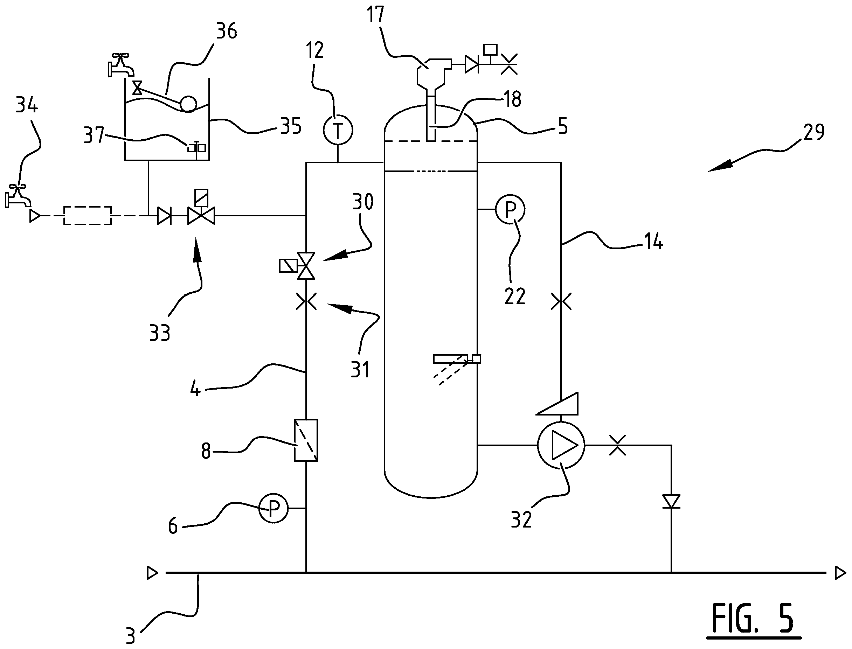

Figure 5 shows an alternative embodiment of a degassing device 29. Many elements and components correspond to those of the embodiment of figure 2, whereby a detailed description thereof can be dispensed with here.

The embodiment of figure 5 differs however from that of figure 2 in that the controllable motor valve 9 is replaced by a throttle valve 31 with a fixed throughflow capacity in combination with a valve 30 which can be switched to open or closed position. In the embodiment of figure 2 pump 15 is further replaced here by a controllable pump 32 which is for instance, and perhaps even preferably, a frequency-controlled pump. As in the embodiment of figure 2, degassing device 29 also comprises a control which functions on the basis of measurement results of temperature sensor 12 and of measurement results of pressure sensor 22. In the embodiment of figure 2 control 7 acted on motor valve 9 in the case of a constant operation of pump 15, and in the embodiment of figure 5 this or a similar control acts on controllable pump 32 in the case of a substantially constant throughflow capacity of throttle valve 31. The operation of the control does however remain substantially the same, whereby reference is made to the foregoing in respect of Figure 2 for a detailed description thereof. It is additionally noted that controllable pump 32 is preferably driven at a somewhat higher pump capacity than the throughflow capacity of throttle valve 31. Precisely the same operation of degassing device 29 can thus be achieved, while the control acts for this purpose on other components (pump 32) than in the embodiment of Figure 2, where the control acted on controllable valve 9.

In further addition, the embodiment of figure 5 also has additional replenishing means 33 for replenishing system 3 via degassing device 29. Use can be made here of a direct connection to a water conduit 34, or via a replenishing tank 35, in which a float valve 36 and/or a float switch can be arranged for detection of low levels in replenishing tank 35.

After examination of the foregoing description of a preferred embodiment on the basis of particularly, though not only figures 2 and 5, many alternative and additional embodiments will occur to the skilled person which all lie within the scope of protection of the present invention as defined in the appended claims, in particular the independent claims thereof.

It is thus possible for the invention to find application in a field other than pressure step degassing, and/or a controllable valve can be applied other than the motor valve stated and shown in the figures and description. Many other alternative and additional features, aspects, components and steps are possible without departing from the independent claims of the appended claims.

## Claims

1. A degassing device (2; 29) which can be at least connected to a cooling or heating installation (3) with a circuit and medium circulating in the circuit during operation, which degassing device (2; 29) comprises:
- a reservoir (5) for connection via at least a supply conduit (4) and a discharge conduit (14) to the cooling or heating installation (3) and having a vent (17) for degassing the medium;
- a pump (15; 32) in the discharge conduit (14) between the reservoir and the cooling or heating installation (3); and
- a controllable valve (9, 10; 30, 31) in the supply conduit (4),
**characterized by**
- a pressure sensor (22) connected to the reservoir (5);
- a temperature sensor (12) connected to the reservoir (5); and
- a control (7) which is connected at least to the pressure sensor (22) and the temperature sensor (12) and which is configured to drive at least one of the pump (15; 32) and the controllable valve (9, 10; 30, 31) during the degassing subject to a pressure in the reservoir (5) sensed by the pressure sensor (22) and to a temperature in the reservoir (5) sensed by the temperature sensor (12) and to hold the temperature of the medium in the reservoir (5) below a boiling point associated with the pressure and the temperature of the medium and to prevent decrease of pressure in the reservoir to too low a value by admitting medium from the system into the reservoir during the degassing,
wherein the control (7) is configured to either or both of:
at least partially open the controllable valve (9, 10) in the supply conduit (4) to the reservoir (5) during the degassing and to provide a throughfeed capacity through the controllable valve (9, 10), which is lower than a pump capacity of the pump (15), and
drive the pump (32) in the discharge conduit (14) to the cooling or heating installation (3) during the degassing with a throughfeed capacity higher than a throughfeed capacity of the controllable valve (30, 31).

2. The degassing device (2) as claimed in claim 1, further comprising a pressure sensor (6) associated with the supply conduit (4) and connected to the control.

3. The degassing device (2) as claimed in claim 1 or 2, wherein the controllable valve (9, 10) comprises a motor valve.

4. The degassing device (2) as claimed in one or more than one foregoing claim, wherein a dish or spray element (13) is arranged in the reservoir (5).

5. The degassing device (2) as claimed in one or more than one foregoing claim, further comprising either or both of:
- a non-return valve (16) arranged on a suction side of the pump (15); and
- a float switch (23) connected to the control (7).

6. The degassing device (2) as claimed in one or more than one foregoing claim, wherein the vent (17) is a float vent (17).

7. The degassing device (2) as claimed in one or more than one foregoing claim, wherein the vent (17) is arranged on a pipe (18) placed in the reservoir (5).

8. The degassing device (2) as claimed in one or more than one foregoing claim, wherein a pressure switch (21) is arranged in association with the vent (17), which switch is connected to the control (7) for the purpose of providing to the control (7) an indicative signal that gas is leaving the reservoir (5) via the vent (17).

9. A degassing method for degassing in or out of a reservoir (5), having a vent (17), a supply and an outlet, at least a part of a medium circulating in a circuit of a cooling or heating installation (3), comprising of:
- lowering the pressure in the reservoir (5) with a pump (15; 32) connected to the outlet of the reservoir (5) in order to carry gas released from the medium as a result of pressure reduction in the reservoir (5) out of the reservoir via the vent (17); and
- providing a controllable valve (9, 10; 30, 31) at the supply;
**characterized by**
- sensing a pressure in the reservoir with a pressure sensor connected to the reservoir;
- sensing a temperature in the reservoir with a temperature sensor connected to the reservoir; and
- controlling at least one of the controllable valve (9, 10; 30, 31) at the supply and the pump (15; 32) connected to the outlet subject to a sensed pressure and a sensed temperature, in order to hold the temperature of the medium in the reservoir (5) below a boiling point associated with the pressure and the temperature of the medium and to prevent decrease of pressure in the reservoir to too low a value by admitting medium from the circuit into the reservoir (5) during the degassing, comprising either or both of:
- at least partially opening the supply to the reservoir (5) during the degassing and thereby providing a throughfeed capacity lower than a pump capacity of the pump (15; 32); and
- driving the pump (15; 32) connected to the outlet and to the cooling or heating installation (3) during the degassing with a throughfeed capacity higher than a throughfeed capacity of the controllable valve (9, 10; 30, 31).

10. The method as claimed in claim 9, further comprising of repeating the steps of the method in cyclic manner, in each case with a fresh quantity of medium in the reservoir from the cooling or heating installation (3).

11. The method as claimed in claim 9 or 10 or 11, further comprising of holding pressure in the reservoir (5) at or close to a value which is preferably slightly higher than a boiling point associated with the temperature prevailing in the reservoir, preferably 0.1 - 0.2 bar thereabove.

12. The method as claimed in at least one of the foregoing claims 9-11, further comprising of monitoring nitrogen in the medium as indication of the need for degassing of the medium in the reservoir.

13. A system comprising a cooling or heating installation (3) and a degassing device (2) as claimed in at least one of the foregoing claims 1-8.

14. A control for a degassing device as claimed in at least one of the foregoing claims 1-8 which is configured to perform the method according to at least one of the foregoing claims 9-12.

15. A program designed for the purpose, when executed on or in a computer or control (7), of implementing the steps of the method as claimed in at least one of the foregoing claims 9-12.

## Patentansprüche

1. Eine Entgasungs-Vorrichtung (2; 29) welche mindestens mit einer Kühl- oder
Heizanlage (3) mit einem Kreislauf und beim Betrieb im Kreislauf zirkulierendem Medium, verbunden werden kann, wobei die Entgasungs-Vorrichtung (2; 29) aufweist:
- ein Reservoir (5) zur Verbindung mit der Kühl- oder Heizanlage (3) über mindestens eine Zufluss-Leitung (4) und eine Abfluss-Leitung (14) und mit einer Entlüftung (17) zum Entgasen des Mediums;
- eine Pumpe (15; 32) in der Abfluss-Leitung (14) zwischen dem Reservoir und der Kühl- oder Heizanlage; und
- ein steuerbares Ventil (9, 10; 30, 31) in der Zufluss-Leitung (4),
**gekennzeichnet durch**
- einen Drucksensor (22), der mit dem Reservoir (5) verbunden ist;
- einen Temperatursensor (12), der mit dem Reservoir (5) verbunden ist; und
- eine Steuerung (7), welche mindestens mit dem Drucksensor (22) und dem Temperatursensor (12) verbunden und ausgelegt ist, mindestens eines der Pumpe (15; 32) oder des steuerbaren Ventils (9, 10; 30, 31) bei der Entgasung abhängig von einem von dem Drucksensor (22) erfassten Druck in dem Reservoir (5) und von einer von dem Temperatursensor (12) erfassten Temperatur in dem Reservoir (5) anzutreiben, und die Temperatur des Mediums im Reservoir (5) unterhalb eines mit dem Druck und der Temperatur des Mediums verknüpften Siedepunkts zu halten, und um einen Druckabfall in dem Reservoir auf einen zu niedrigen Wert zu verhindern, indem beim Entgasen von Medium aus dem System in das Reservoir eingelassen wird,
wobei die Steuerung (7) zu einem oder beidem ausgelegt ist:
zumindest teilweises Öffnen des steuerbaren Ventils (9, 10) in der Zufluss-Leitung (4) zu dem Reservoir (5) beim Entgasen und für eine Durchlaufkapazität durch das steuerbare Ventil (9, 10) zu sorgen, welche geringer ist für eine Pumpkapazität der Pumpe (15), und
Antreiben der Pumpe (32) in der Abfluss-Leitung (14) zu der Kühl- oder
Heizanlage (3) beim Entgasen mit einer Durchlaufkapazität höher als die Durchlaufkapazität des steuerbaren Ventils (30, 31).

2. Entgasungs-Vorrichtung (2) nach Anspruch 1, ferner mit einem Drucksensor (6), der der Zufluss-Leitung (4) zugeordnet und mit der Steuerung verbunden ist.

3. Entgasungs-Vorrichtung (2) nach Anspruch 1 oder 2, wobei das steuerbare Ventil (9, 10) ein Motorventil aufweist.

4. Entgasungs-Vorrichtung (2) nach einem oder mehr als einem der vorhergehenden Ansprüche, wobei ein Teller- oder Sprühelement (13) in dem Reservoir (5) angeordnet ist.

5. Entgasungs-Vorrichtung (2) nach einem oder mehr als einem der vorhergehenden Ansprüche, ferner eines oder beides aufweisend:
- ein Rückschlagventil (16), das auf einer Saugseite der Pumpe (15) angeordnet ist; und
- ein Schwimmerschalter (23), der mit der Steuerung (7) verbunden ist.

6. Entgasungs-Vorrichtung (2) nach einem oder mehr als einem der vorherigen Ansprüche, wobei die Entlüftung (17) ein Schwimmerentlüfter (17) ist.

7. Entgasungs-Vorrichtung (2) nach einem oder mehr als einem der vorherigen Ansprüche, wobei die Entlüftung (17) an einem Rohr (18) in dem Reservoir (5) angeordnet ist.

8. Entgasungs-Vorrichtung (2) nach einem oder mehr als einem der vorherigen Ansprüche, Schalter mit der Steuerung (7) verbunden ist, um der Steuerung (7) ein anzeigendes Signal zu liefern, dass Gas das Reservoir (5) über die Entlüftung (17) verlässt.

9. Entgasungs-Verfahren zum Entgasen in oder aus einem Reservoir (5), das eine Entlüftung (17), einen Zufluss und einen Abfluss aufweist, wobei mindestens ein Teil eines Mediums in einem Kreislauf einer Kühl- oder Heizanlage (3) zirkuliert, umfassend:
- Absenken des Drucks in dem Reservoir (5) mit einer Pumpe (15; 32), die mit dem Abfluss des Reservoirs (5) verbunden ist, um aus dem Medium freigesetztes Gas als Ergebnis einer Druckverminderung in dem Reservoir (5) aus dem Reservoir über die Entlüftung zu transportieren; und
- Bereitstellen eines steuerbaren Ventils (9, 10; 30, 31) an dem Zufluss;
**gekennzeichnet durch**:
- Erfassen eines Drucks in dem Reservoir mit einem Drucksensor, der mit dem Reservoir verbunden ist;
- Erfassen einer Temperatur in dem Reservoir mit einem Temperatursensor, der mit dem Reservoir verbunden ist; und
- Ansteuern von mindestens einem des steuerbaren Ventils (9, 10; 30, 31) am Zufluss und der mit dem Abfluss verbundenen Pumpe (15; 32) gemäß eines gemessenen Drucks und einer gemessenen Temperatur, um die Temperatur des Mediums im Reservoir (5) unterhalb eines mit dem Druck und der Temperatur des Mediums verknüpften Siedepunkts zu halten, und um einen Druckabfall in dem Reservoir auf einen zu niedrigen Wert zu verhindern, indem Medium aus dem Kreislauf in das Reservoir (5) beim Entgasen eingelassen wird, eines oder beides umfassend:
- zumindest teilweises Öffnen des Zuflusses zum Reservoir (5) beim Entgasen und dadurch für eine Durchlaufkapazität geringer als die Pumpkapazität der Pumpe (15; 32) zu sorgen; und
- Antreiben der Pumpe (15; 32), die mit dem Abfluss und der Kühl- oder Heizanlage (3) verbunden ist, beim Entgasen mit einer Durchlaufkapazität höher als die Durchlaufkapazität des steuerbaren Ventils (9, 10; 30, 32).

10. Verfahren nach Anspruch 9, ferner umfassend, die Schritte des Verfahrens jeweils mit ei ner frischen Menge an Medium in dem Reservoir von der Kühl- oder Heizanlage zyklisch zu wiederholen.

11. Verfahren nach einem der Ansprüche 9 oder 10 oder 11, ferner umfassend, den Druck im Reservoir (5) auf oder nahe einem Wert zu halten, welcher vorzugsweise etwas höher als ein mit der im Reservoir vorherrschenden Temperatur verknüpfter Siedepunkt ist, vorzugsweise 0.1-0.2 bar darüber.

12. Verfahren nach einem der vorhergehenden Ansprüche 9-11, ferner umfassend, Nitrogen in dem Medium als Hinweis darauf zu überwachen, dass ein Entgasen des Mediums in dem Reservoir nötig ist.

13. Ein System mit einer Kühl- oder Heizanlage (3) und einer Entgasungsvorrichtung (2) nach einem der vorhergehenden Ansprüche 1-8.

14. Eine Steuerung für eine Entgasungs-Vorrichtung nach wenigstens einem der vorhergehen den Ansprüchen 1-8, die ausgelegt ist, um das Verfahren nach wenigstens einem der vorhergehenden Ansprüche 9-12 auszuführen.

15. Ein Programm, ausgelegt dafür, dass es die Schritte des Verfahrens nach wenigstens einem der vorhergehenden Ansprüchen 9-12 implementiert, wenn es auf oder in einem Computer oder einer Steuerung (7) ausgeführt wird.

## Revendications

1. Dispositif de dégazage (2 ; 29) qui peut être connecté au moins à une installation de refroidissement ou de chauffage (3) avec un circuit et un fluide circulant dans le circuit pendant le fonctionnement, ce dispositif de dégazage (2 ; 29) comprenant :
- un réservoir (5) destiné à être connecté, par l'intermédiaire d'au moins une conduite d'alimentation (4) et une conduite d'évacuation (14), à l'installation de refroidissement ou de chauffage (3) et comprenant un dispositif de ventilation (17) pour le dégazage du fluide ;
- une pompe (15 ; 32) dans la conduite d'évacuation (14) entre le réservoir et l'installation de refroidissement ou de chauffage (3) ; et
- une vanne contrôlable (9, 10 ; 30, 31) dans la conduite d'alimentation (4),
**caractérisé par**
- un capteur de pression (22) connecté au réservoir (5) ;
- un capteur de température (12) connecté au réservoir (5) ; et
- un dispositif de commande (7) qui est connecté au moins au capteur de pression (22) et au capteur de température (12) et qui est conçu pour piloter au moins une pompe (15 ; 32) et la vanne contrôlable (9, 10 ; 30, 31) pendant le dégazage en fonction d'une pression dans le réservoir (5) détectée par le capteur de pression (22) et d'une température dans le réservoir (5) détectée par le capteur de température (12) et pour maintenir la température du fluide dans le réservoir (5) en dessous d'un point d'ébullition associé à la pression et à la température du fluide et pour empêcher la diminution de pression dans le réservoir à une valeur trop faible en introduisant du fluide provenant du système dans le réservoir pendant le dégazage,
le dispositif de commande (7) étant conçu pour effectuer l'une de ces deux opérations ou les deux :
ouverture au moins partielle de la vanne contrôlable (9, 10) dans la conduite d'alimentation (4) vers le réservoir (5) pendant le dégazage et fourniture d'une capacité d'écoulement à travers la vanne contrôlable (9, 10), qui est inférieure à une capacité de pompage de la pompe (15) et
commande de la pompe (32) dans la conduite d'évacuation (14) vers l'installation de refroidissement ou de chauffage (3) pendant le dégazage avec une capacité d'écoulement supérieure à une capacité d'écoulement de la vanne contrôlable (30, 31).

2. Dispositif de dégazage (2) selon la revendication 1, comprenant en outre un capteur de pression (6) associé à la conduite d'alimentation (4) et connecté au dispositif de commande.

3. Dispositif de dégazage (2) selon la revendication 1 ou 2, dans lequel la vanne contrôlable (9, 10) comprend une vanne motorisée.

4. Dispositif de dégazage (2) selon l'une ou plusieurs des revendications précédentes, dans lequel une parabole ou un élément de pulvérisation (13) est disposé dans le réservoir (5).

5. Dispositif de dégazage (2) selon l'une ou plusieurs des revendications précédentes, comprenant l'une des étapes suivantes ou les deux :
- un clapet anti-retour (16) disposé sur un côté d'aspiration de la pompe (15) ; et
- un interrupteur à flotteur (23) connecté au dispositif de commande (7).

6. Dispositif de dégazage (2) selon l'une ou plusieurs des revendications précédentes, dans lequel le dispositif de ventilation (17) est un dispositif de ventilation à flotteur (17).

7. Dispositif de dégazage (2) selon l'une ou plusieurs des revendications précédentes, dans lequel le dispositif de ventilation (17) est disposé sur une canalisation (18) placée dans le réservoir (5).

8. Dispositif de dégazage (2) selon l'une ou plusieurs des revendications précédentes, dans lequel un pressostat (21) est disposé en association avec le dispositif de ventilation (17), ce pressostat étant connecté au dispositif de commande afin de fournir au dispositif de commande (7) un signal indiquant que le gaz quitte le réservoir (5) via le dispositif de ventilation (17).

9. Procédé de dégazage pour le dégazage dans ou hors d'un réservoir (5), comprenant un dispositif de ventilation (17), une alimentation et une sortie, au moins une partie d'un fluide circulant dans un circuit d'une installation de refroidissement ou de chauffage (3), comprenant :
- la réduction de la pression dans le réservoir (5) avec une pompe (15 ; 32) connectée à la sortie du réservoir (5) afin de transporter le gaz libéré par le fluide, du fait de la diminution de pression dans le réservoir (5), hors du réservoir via le dispositif de ventilation (17) ; et
- la fourniture d'une vanne contrôlable (9, 10 ; 30, 31) au niveau de l'alimentation ;
**caractérisé par**
- la détection d'une pression dans le réservoir avec un capteur de pression connecté au réservoir ;
- la détection d'une température dans le réservoir avec un capteur de température connecté au réservoir ; et
- commande d'au moins une vanne contrôlable (9, 10 ; 30, 31) au niveau de l'alimentation et de la pompe (15 ; 32) connectée à la sortie en fonction d'une pression détectée et d'une température détectée afin de maintenir la température du fluide dans le réservoir (5) en dessous d'un point d'ébullition associé à la pression et à la température du fluide et d'empêcher la diminution de pression dans le réservoir à une valeur trop faible en introduisant du fluide provenant du circuit dans le réservoir (5) pendant le dégazage, comprenant l'une des étapes suivantes ou les deux :
- ouverture au moins partielle de l'alimentation vers le réservoir (5) pendant le dégazage et fourniture d'une capacité d'écoulement inférieure à une capacité de pompage de la pompe (15 ; 32) ; et
- commande de la pompe (15 ; 32) connectée à la sortie et à l'installation de refroidissement ou de chauffage (3) pendant le dégazage avec une capacité d'écoulement supérieure à une capacité d'écoulement de la vanne contrôlable (9, 10 ; 30, 31).

10. Procédé selon la revendication 9, comprenant en outre la répétition des étapes du procédé de manière cyclique, dans chaque cas avec une nouvelle quantité de fluide dans le réservoir provenant de l'installation de refroidissement ou de chauffage (3).

11. Procédé selon la revendication 9 ou 10 ou 11, comprenant en outre le maintien de la pression dans le réservoir (5) à ou près d'une valeur qui est de préférence légèrement supérieure à un point d'ébullition associé à la température régnant dans le réservoir, de préférence de 0,1 à 0,2 bar au-dessus.

12. Procédé selon au moins l'une des revendications précédentes 9 à 11, comprenant en outre de l'azote de surveillance dans le fluide en tant qu'indicateur du besoin de dégazage du fluide dans le réservoir.

13. Système comprenant une installation de refroidissement ou de chauffage (3) et un dispositif de dégazage (2) selon au moins l'une des revendications précédentes 1 à 8.

14. Dispositif de commande pour un dispositif de dégazage selon au moins l'une des revendications 1 à 8, qui est conçu pour exécuter le procédé selon au moins l'une des revendications précédentes 9 à 12.

15. Programme conçu pour réaliser, s'il est exécuté sur ou dans un ordinateur ou un dispositif de commande (7), les étapes du procédé selon au moins l'une des revendications précédentes 9 à 12.
